# EUROPEAN PATENT SPECIFICATION

(11) **EP 4 239 298 B1**
(45) Date of publication and mention of the grant of the patent: **30.04.2025**
(21) Application number: 22305241.6
(22) Date of filing: 02.03.2022
(51) Int. Cl.: G01G 3/14, G01G 19/12

(54) **TRANSDUCER PLATE FOR A MULTI-LEAF SPRING ASSEMBLY**
WANDLERPLATTE FÜR EINE MEHRFACHBLATTFEDERANORDNUNG
PLAQUE DE TRANSDUCTEUR POUR UN ENSEMBLE DE RESSORT À LAMES

(43) Date of publication of application: 06.09.2023
(73) Proprietor: Bollhoff Otalu S.A., 73490 La Ravoire (FR); Böllhoff Verbindungstechnik GmbH, 33649 Bielefeld (DE)
(72) Inventor: Draht, Torsten, 33758 Schloß Holte-Stukenbrock (DE); Möhring, Jörg, 33106 Paderborn (DE); Jambut, Jean-François, 73190 Challes les eaux (FR); Romala, Julien, 73000 Chambéry (FR)
(74) Representative: HWP Intellectual Property

(56) References cited:
- GB-A- 1 310 889

## Description

### 1. Field of the invention

The present invention relates to a transducer plate adapted to be mounted in a multi-leaf spring arrangement as well as to a multi-leaf spring arrangement of a motor vehicle comprising a plurality of leaf springs in combination with the transducer plate for measuring leaf spring deflections.

### 2. Background of the invention

Leaf spring arrangements are generally used as a suspension arrangement for vehicles. These leaf spring arrangements vary with the size of the vehicle to be suspended.

Within the leaf spring arrangement, individual leaf springs or a combination of leaf springs are deflected dependent on the load of the vehicle. Accordingly, different constructions have been created in order to collect data with respect to the acting vehicle load to be used in the vehicle control.

US 2019/0170567 A1 discloses an apparatus and system to detect load applied to a vehicle suspension. An example apparatus includes a vehicle spring positioned between a first spring seat and a second spring seat. A cap is coupled to the first spring seat to define a cavity. A force sensor is positioned in the cavity adjacent surface of the first spring seat. The force sensor is made of a thin film transducer which is arranged on top of a stack of several leaf springs. The stack of leaf springs including the thin film transducer is fastened by means of several U-bolts to the axle of the vehicle. Such thin-film transducers used as a force sensor are very sensitive. If it is directly mounted within the stack of leaf springs, it is susceptible to damage and contamination leading to failure of the collected data.

CN 20687973 U describes a multi-leaf spring arrangement including a load cell for measuring the vehicle load. The sensor is positioned on a bar-like arrangement. This bar like arrangement is mounted by a first pair of U-bolts to the multi-leaf spring stack. A second pair of U-bolts is used to fasten the sensor construction to the vehicle axle. The bar-like construction bearing the sensor is stiff with respect to acting bending forces. Consequently, the bar-like construction bearing the sensor does not easily follow the deflections of the adjacent leaf spring. As a consequence, the measured deflection is smaller compared to the deflection of the leaf spring leading to a distorted result.

US 5,684,254 also describes a vehicle load measuring device including a sensing element for detecting a strain to measure the load of the vehicle. To this end, different constructions are disclosed which are combined with a multi-leaf spring arrangement. According to one alternative, a leveling plate is proposed, which is integrated in the stack of multiple leaf springs mounted on top of each other. This leveling plate is fixed to the stack of leaf springs and to the vehicle axis by means of a pair of U-bolts. Furthermore, the leveling plate has a rectangular shape being similar to a part of the leaf spring. The leveling plate having a shape of a thick rectangular plate includes a recess formed at its center. A sensing element of the strain gauge type is fitted into the recess. In order to hold the sensing element in position, it is adhered or welded to the thick rectangular plate. The leveling plate including the sensing element is interposed between the leaf spring and the axle case for mounting the whole arrangement to the vehicle axis.

US 3,743,041 also discloses a beam-type transducer assembly adapted for insulation between the stack of leaf springs and an axle of vehicle such as a truck or a semi-trailer for measuring the load on the axle. To this end, an elastically bendable beam construction is proposed. The beam construction is mounted in the multi-leaf spring arrangement by means of at least eight fastening bolts extending through respective fastening openings. On opposed sides of the bendable beam, a pair of fulcrum pins is positioned to support the deflection of the beam construction during use. Based on this construction, the bendable beam is bend around the pair of fulcrum pins being arranged in a smaller distance to each other as compared to the second pair of fulcrum pins. A plurality of conventional strain gauge is adhered to the surfaces of the beam. As a consequence, on opposed sides of the beam, at least two strain gauges are adhered to detect the deflection of the bendable beam in combination with the stack of multi-leaf springs. Based on the number of strain gauges used and the sophisticated construction of the bendable beam, the proposed load measuring device is expensive and requires extensive control efforts.

A further electrical measuring device is described in GB 1 310 889 A. The device for measuring the weight of a load comprises a plurality of electrical resistance strain gauge elements connected in electrical bridge form and bonded to one major face or both major faces of a resilient metal plate having a thickness as herein described, so that the resulting assembly forms a transducer which is adapted to be electrically connected to an indicator for indicating the electrical output from the transducer. The transducer being constructed in such a way as to be capable of being mounted on a leaf spring assembly interposed between the axle of a road vehicle and that part of the vehicle which carries the load, or in such a way that said resilient plate can form part of said assembly. The metal plate having resiliency characteristics substantially the same as or better than said spring assembly.

With respect to the variety of load measuring devices in combination with a multi-leaf spring arrangement, it is an object of the present invention to provide an alternative arrangement which is robust and resistant to withstand contamination. Furthermore, it is an object to provide a simple construction requiring less control efforts for low detection.

### 3. Summary of the invention

The above object is solved by a transducer plate adapted to be mounted in a multi-leaf spring arrangement according to independent claim 1. Furthermore, the object is solved by a multi-leaf spring arrangement of a motor vehicle comprising a plurality of leaf springs in combination with the transducer plate according to independent claim 11. Modifications and further developments result from the following description, the drawings as well as the appending claims.

The inventive transducer plate is adapted to be mounted in a multi-leaf spring arrangement so that a deflection of an adjacent leaf spring can be measured. Further, said transducer plate comprises the following features: at least two oppositely arranged clamping ridges which are spaced from each other by a bending section, at least two stiffening webs oppositely arranged to each other and each bridging a distance between the opposed clamping ridges wherein the at least two stiffening webs are spaced from each other by the bending section, and mechanically decoupled from the bending section by an intermediate separation segment formed as a recess or an opening, and a measuring sector centrally arranged in the bending section between the clamping ridges and the stiffening webs, respectively, wherein a wire strain gauge can be disposed on the measuring sector for deflection evaluation.

Based on an increasing need to evaluate vehicle data, like the weight or the loading status of a vehicle, suspension components of the vehicle are combined with sensor arrangements. These sensor arrangements evaluate a deflection of the suspension component to draw conclusions on the loading condition and/or the weight of the vehicle.

A widely used suspension component consists of a stack of several leaf springs combined in a known multi-leaf spring arrangement which is coupled to a vehicle axle. The individual leaf springs as well as the stack of leaf springs are deflected or deformed dependent on the vehicle weight and/or vehicle loading.

The transducer plate is formed like a multifunctional bending bar following the deflection of the multi-leaf spring arrangement. To this end, the transducer plate has preferably substantially a square shape. A bending section is arranged in the center of the transducer plate. The bending section is preferably framed and thereby mechanically shielded by the two opposed clamping ridges and the two opposed stiffening webs. The clamping ridges ensure a reliable fastening to the multi-leaf spring arrangement so that the transducer plate may follow the leaf deflection. The pair of stiffening webs preferably bridge the distance between the clamping ridges to reinforce the frame surrounding the bending section. Thus, the combination of the clamping ridges and the stiffening webs form the preferred frame in which the bending section may follow the leaf spring deflection. To increase the adaptability of the bending section to the leaf spring deflection, and in particular of the centrally arranged measuring sector, an intermediate recess or opening mechanically decouples the stiffening webs from the bending section. By means of the separation segments, the bending section and also the measuring sector are less bonded to the stiffening webs.

According to a preferred embodiment of the invention, only one strain gauge is mounted on the measuring sector. The strain gauge follows the deflections of the measuring sector and the leaf spring, to generate a corresponding electrical signal.

According to the invention, the at least two clamping ridges have two fastening openings, respectively, for mounting the transducer plate in a multi-leaf spring arrangement.

In a known manner, a multi-leaf spring arrangement is mounted by preferred U-bolts to a vehicle axle or a similar constructive element. The U-bolts are preferably used to fasten the transducer plate to the leaf spring arrangement. Since the legs of the U-bolts extend through the fastening openings of the transducer plate, the transducer plate becomes an additional stack element of the multi-leaf spring arrangement. Furthermore, the preferred combination of the U-bolts and the fastening openings guarantee a suitable orientation of the transducer plate to the leaf springs. Further preferred, the stiffening webs of the transducer plate according to the invention have a stiffening thickness which is at least 5 % smaller than a clamping thickness of the clamping ridges each measured perpendicularly to the transducer plate.

According to a preferred embodiment of the invention, the clamping thickness of the clamping ridges is larger than a stiffening thickness of the stiffening webs. The clamping ridges have to assure the stable fastening of the transducer plate to the leaf spring arrangement. The stiffening webs are preferably configured to meet a compromise between the stabilization of the transducer plate and an increased flexibility of the transducer plate parallel to the leaf spring orientation. An increased flexibility is achieved by having a reduced stiffening thickness as compared to the clamping thickness. Thereby, the transducer plate may more easily follow the deflection of the leaf springs.

According to a further preferred embodiment of the transducer plate, the bending section comprises symmetrically arranged recesses or gaps positioned between the stiffening ridge and the measuring sector, respectively.

The bending section is to follow the leaf springs deflection to support an accurate strain measurement at the measuring sector. To facilitate a measurable bending of the bending section and the measuring sector, recesses or gaps between each stiffening web and the bending section are arranged. The gaps or openings or recesses release or reduce a mechanical coupling between each stiffening web and the adjacent bending section. Thereby, the stabilizing frame-like construction of the transducer plate is retained. Within the frame-like construction, a bending flexibility of the bending section and the measuring sector is preferably enhanced. As a consequence, the fixing of the bending section by the stiffening webs is reduced by the recesses or gaps.

As a further preferred construction of the above-described transducer plate, the recesses have a remaining plate thickness smaller than the stiffening thickness of the stiffening ribs.

According to preferred embodiments of the present invention, the depth of the recess is varied in order to optimize the bending of the measuring sector.

The preferred recesses or gaps of the bending sections have a triangular form tapering in the direction of the measuring sector.

Further preferred, the triangular shape of the recesses or gaps has a certain orientation in the bending section. Preferably, one side of the triangular shape is parallel to the stiffening web to realize a mechanical decoupling between the stiffening web and the bending section. Furthermore, the at least two recesses or the at least two gaps are symmetrically arranged with respect to the measuring sector. The symmetric arrangement preferably guarantees that the measuring sector follows the leaf spring deflection with no lateral distortion within the bending section.

According to preferred embodiments of the present invention, the depth of the recess is varied in order to optimize the bending of the measuring sector.

According to preferred embodiments of the present invention, the depth of the recess is varied in order to optimize the bending of the measuring sector.

According to an additionally preferred embodiment of the present invention, the transducer plate comprises a measuring face and a supporting face wherein the measuring face includes the surface of the measuring sector onto which the at least one strain gauge can be mounted, and the supporting face has a depression for receiving a damping element.

The transducer plate preferably has a measuring face and a supporting face. With respect to a multi-leaf spring assembly mounted adjacent to a vehicle axle, the transducer plate preferably faces with the supporting face to the stack of leaf springs or the adjacent leaf spring. According to a preferred construction of the transducer plate, the clamping ridges extend beyond the measuring sector in a direction perpendicular to the transducer plate face. Based on this construction principle, it is also preferred to mount the transducer plate on the multi-leaf spring assembly facing with the measuring face to the adjacent leaf spring. The projecting clamping ridges realize a clearance between the measuring sector and the leaf spring or a mounting plate. Thereby, the at least one strain gauge positioned on the measuring sector is protected against unintentional contact.

According to a further preferred embodiment of the present invention, the transducer plate is integrated into a multi-leaf spring assembly having an additional bumper. A bumper serves for protecting a vehicle from greater mechanical loads, either abrupt loads, like shocks, or permanent loads due to a loading or an overloading of the vehicle. To detect mechanical vehicle loads absorbed by a bumper, the transducer plate preferably has a receiving bumper recess at the supporting face. Dependent on the loading condition, the vehicle bumper engages the bumper recess and introduces a mechanical loading into the transducer plate. The mechanical loading of the bumper recess results in a deflection of the measuring sector and the strain gauge mounted thereon. The corresponding electrical signal generated by the strain gauge represents a strength of the mechanical loading of the vehicle by means of the bumper. It is further preferred that the strain gauge data represents a combination of the bending of the transducer plate generated by the leaf spring or springs as well as the bumper impact.

Preferred according to the invention, the measuring sector bears at least one strain gauge and is encapsulated as a safeguard against contamination and damage.

Based on the construction of the transducer plate, preferably only one strain gauge is mounted on the measuring sector. The electrical signal produced by the only one strain gauge is sufficient for drawing conclusions regarding the loading condition of the vehicle. The electrical signals are submitted to a control unit of the vehicle for processing and interpretation.

In order to protect the strain gauge against damage and contamination, the measuring sector bearing the strain gauge is preferably encapsulated by a sealing mass, like resin or similar materials.

According to a further preferred embodiment of the present invention, the depression of the supporting face of the transducer plate is arranged on a lateral plate section which extends laterally of the clamping ridge and remote from the bending section.

According to different preferred embodiments of the transducer plate, the bumper recess or the bumper depression on the supporting face is arranged below the bending section between the oppositely arranged clamping ridges.

According to further preferred embodiment, the transducer plate has a lateral extension extending laterally beyond one of the clamping ridges. The laterally arranged bumper recess or depression is positioned laterally from, but not below the measuring sector. Nevertheless, a bumper engaging the lateral bumper depression deflects the transducer plate as well as the measuring sector resulting in a corresponding electrical signal from the strain gauge.

As further preferred according to the present invention, the transducer plate is made as a one-part unit.

According to a further preferred embodiment of the present invention, the transducer plate is a one-piece component. Preferably, it is manufactured from a steel plate or the like by a combination of the following: cutting, rolling, milling and drilling.

The present invention also provides a multi-leaf spring arrangement of a motor vehicle comprising a plurality of leaf springs arranged in a stack, a vehicle axle and a number of U-bolts encompassing the vehicle axle wherein the number of U-bolt retains the plurality of leaf springs between the vehicle axle and the transducer plate according to any of the preceding claims.

### 4. Short description of the drawings

In the following, the present invention will be described in detail based on the drawings showing preferred embodiments of the present invention. In the drawings, the same reference signs denote the same elements and/or components. It shows:
- Figure 1: a sectional view of a vehicle axle mounted on a multi-leaf spring arrangement in combination with a preferred embodiment of the inventive transducer plate,
- Figure 2: a perspective view of a preferred embodiment of the transducer plate mounted on a leaf spring,
- Figure 3: a perspective view of a further preferred embodiment of the transducer plate mounted on a leaf spring,
- Figure 4: a perspective view of a further preferred embodiment of the transducer plate mounted on a leaf spring,
- Figure 5: a perspective view of a further preferred embodiment of the transducer plate mounted on a leaf spring,
- Figure 6: a sectional side view of a preferred embodiment of the inventive transducer plate illustrating the neutral state dependent of the geometric configuration of the transducer plate,
- Figure 7: a sectional side view of a further preferred embodiment of the inventive transducer plate illustrating the neutral state dependent of the geometric configuration of the transducer plate,
- Figure 8: a sectional side view of a further preferred embodiment of the inventive transducer plate illustrating the neutral state dependent of the geometric configuration of the transducer plate,
- Figure 9: a sectional side view of a further preferred embodiment of the inventive transducer plate illustrating the neutral state dependent of the geometric configuration of the transducer plate,
- Figure 10: a sectional side view of a further preferred embodiment of the inventive transducer plate illustrating the neutral state dependent of the geometric configuration of the transducer plate,
- Figure 11: a sectional side view of a further preferred embodiment of the inventive transducer plate having a recess supporting an engaging bumper at the support face of the transducer plate,
- Figure 12: a sectional side view of a further preferred embodiment of the inventive transducer plate having a lateral plate extension which has a recess supporting an engaging bumper at the support face of the transducer plate,

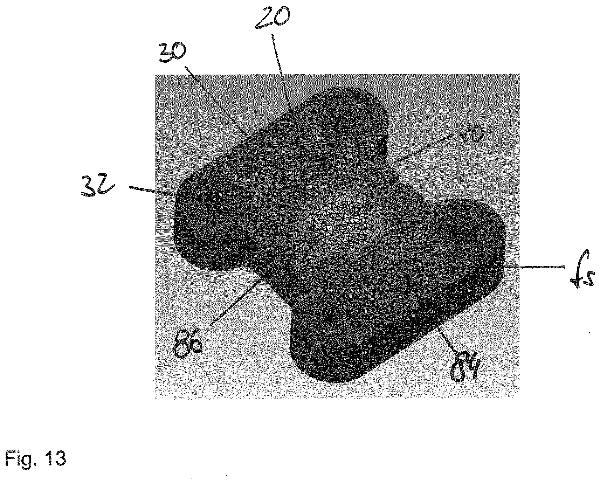

- Figure 13: a perspective view of the support face of a further preferred embodiment of the inventive transducer plate having a recess supporting an engaging bumper wherein the recess is geometrically adapted by a crossing channel-like recess.

### 5. Detailed description of preferred embodiments

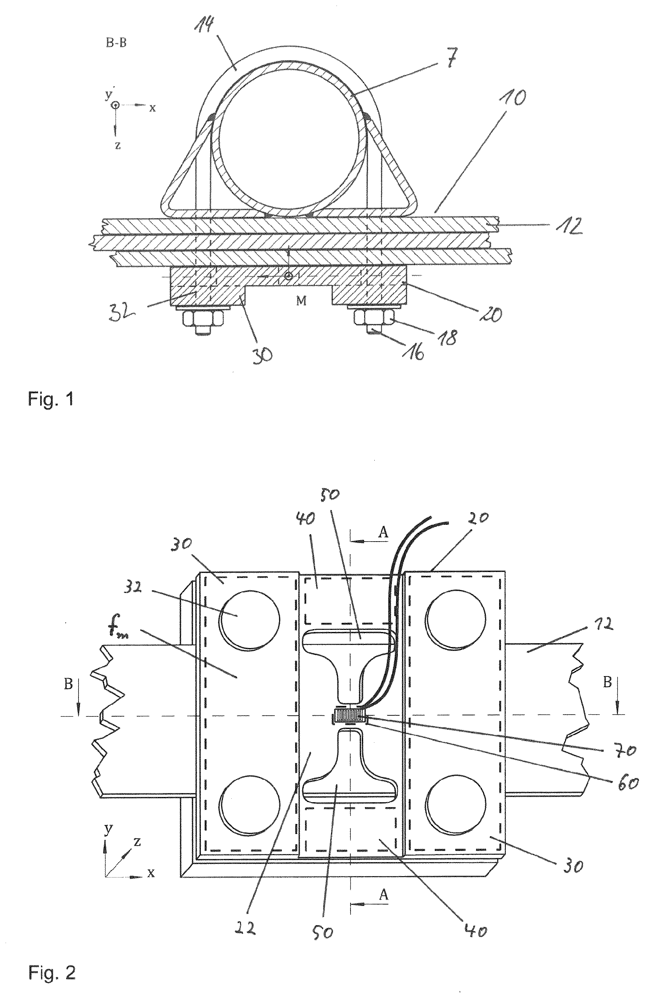

Figure 1 shows an exemplary illustration of a multi-leaf spring arrangement 10 used to suspend a connected vehicle axle 7. A number of leaf springs 12 are fixed by U-bolts 14 to the vehicle axle 7. To this end, the U-bolts 14 encompass the vehicle axle 7 and their threaded ends 16 are fixed by means of nuts 18 within the fastening openings 32 of a transducer plate 20.

According to another preferred embodiment, the threaded ends 16 of the U-bolts 14 are fixed in respective openings of a retaining plate (not shown). The preferred transducer plate 20 can be positioned between two leaf springs 12 or on top of the stack of leaf springs 12 below the vehicle axle 7.

The preferred transducer plate 20 is arranged to follow the deflection of an adjoining or neighboring leaf spring 12. If the transducer plate 20 is positioned within the stack of these springs 12, the legs of the U-bolts 14 extend through the fastening openings 32 and the threaded ends 16 are fixed remote from the transducer plate 20.

According to a further preferred embodiment of the invention, the transducer plate 20 is made as a one-piece metal part by known manufacturing techniques.

A preferred embodiment of the transducer plate 20 in combination with an adjacent leaf spring 12 is depicted in figure 2. The fastening openings 32 forming part of a pair of clamping ridges 30 are not occupied by the legs of the U-bolts 14 for illustrational reasons. The clamping ridges 30 are oppositely arranged to each other to guarantee a reliable fastening of the transducer plate 20 adjacent to a leaf spring 12.

A distance between the opposed clamping ridges 30 is preferably bridged by a pair of stiffening webs 40. According to a preferred embodiment of the invention, two stiffening webs 40 are oppositely arranged to each other bridging the clamping ridges 30 and border the transducer plate 20 to the outside. The pair of clamping ridges 30 and the pair of stiffening webs 40 commonly surround a bending section 22 of the transducer plate 20.

The clamping ridges 30 realize a stable coupling and a defined position of the transducer plate 20 to/on the leaf spring 12 or the stack of leaf springs 12. Their construction preferably prevents or reduces a bending of the transducer plate 20 resulting from a change of a curvature along the longitudinal axis of the clamping ridges 30.

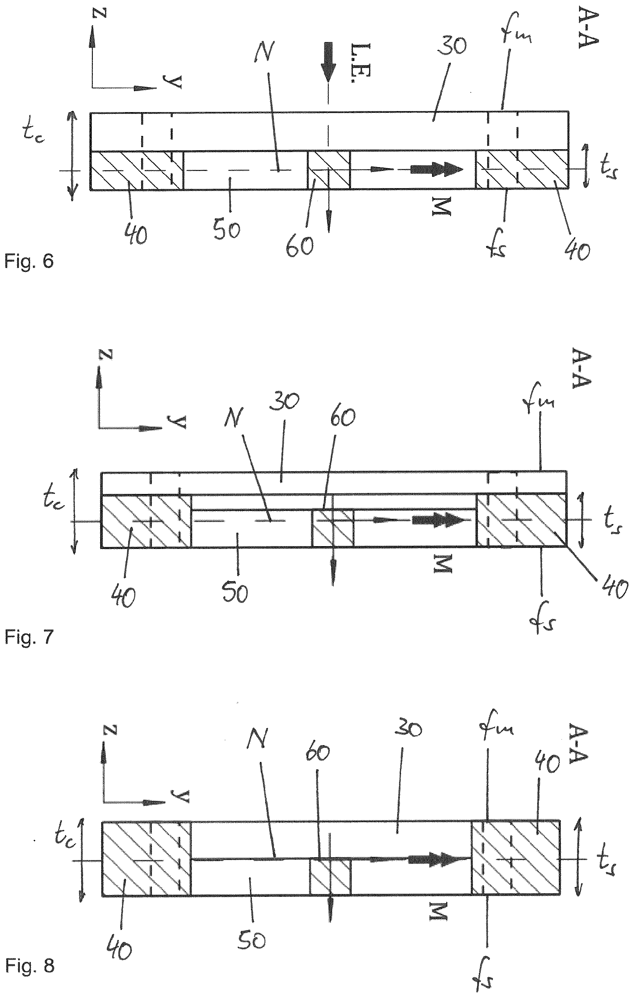

The stiffening webs 40 preferably assure the plate-like configuration of the transducer plate 20, but also enable the transducer plate 20 to follow or adopt the deflection of the at least one adjacent leaf spring 12. To this end, the stiffening webs 40 preferably have a stiffening thickness tₛ less than a clamping thickness t_{c} of the clamping ridges 30. The stiffening thickness tₛ and the clamping thickness t_{c} are measured perpendicular to the transducer plate 20. Different preferred configurations of the stiffening thickness tₛ and the clamping thickness t_{c} are shown in figures 6 to 10. Accordingly, the stiffening thickness tₛ can be smaller or equal to the clamping thickness t_{c}. Preferably, the stiffening thickness tₛ is at least 5 % smaller than the clamping thickness t_{c}.

The bending section 22 of the transducer plate 20 is preferably surrounded by the clamping ridges 30 and the stiffening webs 40. To enhance the flexibility of the bending section 22 to follow the leaf spring deflection, an intermediate separation segment 50 is arranged between the stiffening web 40 and the bending section 22, respectively. Preferably, a pair of intermediate segments 50 is symmetrically arranged with respect to a measuring sector 60. The measuring sector 60 is centrally positioned within the bending section 22.

The intermediate separation segment 50 is formed as a recess or an opening. The recess is preferably positioned at the measuring face fₘ or at the support face fₛ of the transducer plate 20. Based on the configuration of the intermediate separation segment 50, the bending section 22 and particularly the measuring sector 60 are mechanically decoupled from the stiffening webs 40. As a consequence, the measuring sector 60 more easily follows the deflection of the leaf spring 12 since the mechanical stiffening influence of the stiffening webs 40 is reduced.

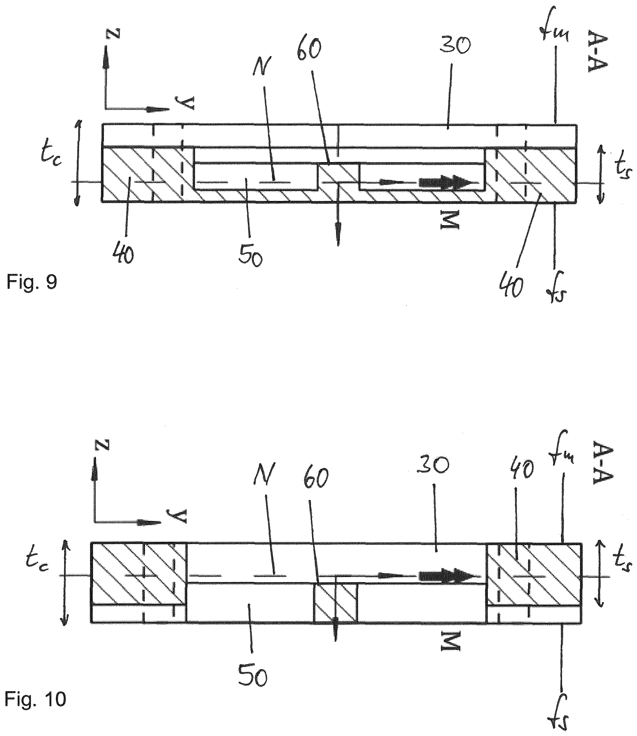

According to a preferred embodiment shown in figures 2 to 5, the intermediate separation segment 50 is formed as an opening. Thereby, a connection between the stiffening web 40 and the adjacent bending section 22 is separated. According to the preferred embodiment of figure 9, the intermediate separation segment 50 is realized like a recess.

The recesses or gaps realizing the intermediate separation segment 50 are preferably symmetrically arranged with respect to the measuring sector 60. The symmetrical positioning of the intermediate separation segment 50 prevents distortions of the measuring sector 60 parallel to the longitudinal axis of the clamping ridges 30. As a consequence, the imaginary halves of the transducer plate 20 formed by the line B-B follow the deflection of the spring 12 having the same deformation.

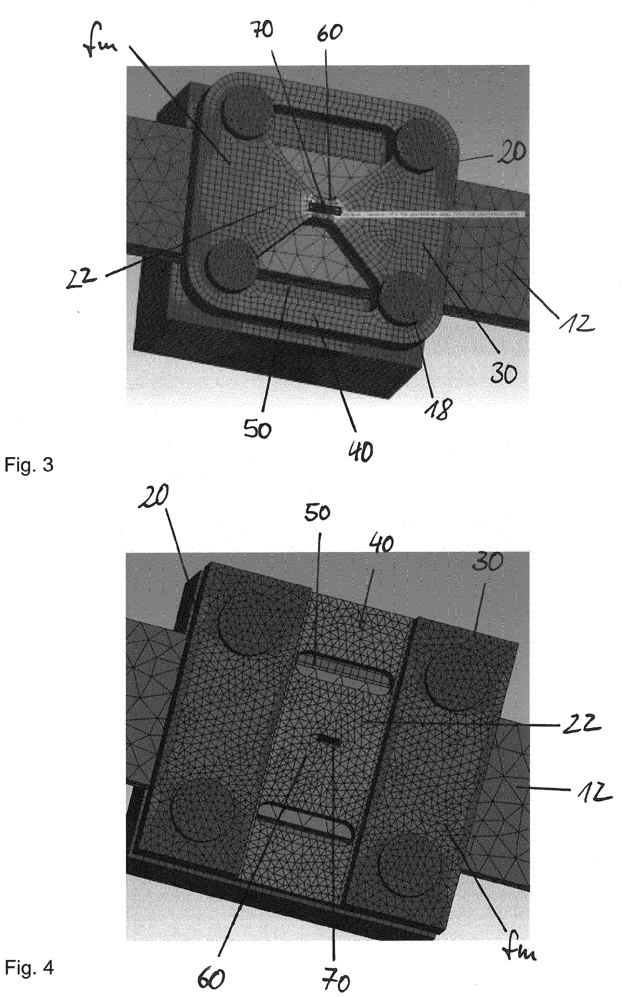

According to the preferred embodiment of the transducer plate 20 shown in figure 3, the intermediate separation segments 50 have a triangular shape. The triangular shape is preferably oriented in such a way that one side extends parallel to the stiffening webs 40. The remaining two sides extend in the direction of the measuring sector 60. Preferably, the triangular shape of the intermediate separation segment 50 tapers in the direction of the measuring sector 60.

It is further preferred that the shape of the intermediate separation segment 50 is triangular but does not have straight sides as shown in figure 2.

In the embodiment of figure 4, the intermediate separation segments 50 are formed like separation channels or openings extending parallel to the stiffening webs 40. Preferably, the stiffening webs 40 and the bending section 22 have the same thickness being smaller than the clamping thickness t_{c}.

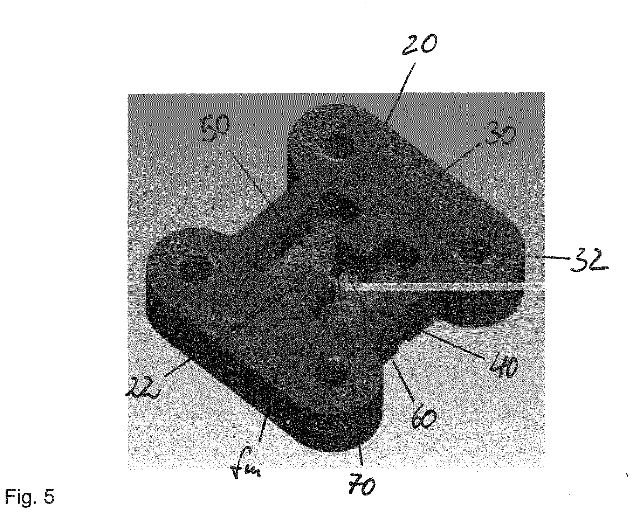

In the preferred embodiment of figure 5, the symmetrically arranged intermediate separation segments 50 form together a double T-shape, which can also be considered as a rotated H. Furthermore, the intermediate separation segments 50 each having a T-shape are formed as a recess, respectively. The T-shape is divided in a first cuboidal recess standing parallel to the stiffening web 40 and a second cuboidal recess extending perpendicularly to the stiffening web 40 so that both perpendicular recesses meet at the measurement sector 60. The measurement sector 60 has a small thickness compared to the remaining transducer plate 20.

According to a preferred embodiment of the present invention, only one strain gauge 70 is mounted on the surface section of measurement sector 60 forming part of the measuring face fₘ of the transducer plate 20. The strain gauge 70 is preferably formed like a longitudinal strip or band which is oriented perpendicularly to the clamping ridges 30 or parallel to the stiffening webs 40.

Further preferred, the strain gauge 70 is mounted centrally between the clamping ridges 30 and the stiffening webs 40. Referring to figure 5, the strain gauge 70 is arranged at the bottom of a recess formed by the intermediate separation segments 50.

Independent of the configuration of the transducer plate 20, the strain gauge 70 is preferably covered by a protecting material, like resin, plastic or the like. The protecting cover acts like a safeguard against contamination and/or damage from the surrounding. Furthermore, the protecting cover has preferably a sufficient elasticity not affecting the deformation of the transducer plate 20 following the deflection of the leaf spring 12.

Referring to figures 6 to 10, different sectional views along the line A-A of figure 2 are shown. The cross-sectional illustration shows a cut through the centrally arranged measurement sector 60, the stiffening webs 40 and the intermediate separation segments 50. The thickness of the measurement sector 60, the clamping thickness t_{c} and the stiffening thickness tₛ were varied and combined in different configurations of the transducer plate 20. If the transducer plate 20 is bent during use in or on a multi-leaf spring arrangement 10, a neutral state N exists within the bent transducer plate 20. The bending moment M is indicated as a double arrow. It acts on the transducer plate 20 around axis y. The neutral state N indicated by the dashed line N in figures 6 to 10 emphasizes that along this line or within this plane, the material of the transducer plate 20 is not subject to mechanical tensions, neither compressive stresses nor tensile stresses. As a consequence, no strain occurs at the neutral state N deforming the material of the transducer plate 20 even if the transducer plate follows the deflection of the leaf spring 12. In this context, it has to be guaranteed that the geometric configuration of the transducer plate 20 does not shift the neutral state N to the surface of the measurement sector 60 where the strain gauge 70 is mounted.

If the strain gauge 70 lies within the neutral state N, then no deflections of the leaf spring 12 could be measured. Such a disadvantageous situation results from the geometric configuration as shown in figure 8.

According to a further preferred embodiment of the present invention, the multi-leaf spring arrangement 10 comprises a bumper 80. The bumper 80 absorbs mechanical loads exposed to a vehicle (not shown). If a vehicle is loaded up to a certain level, the bumper 80 approaches and contacts the preferred transducer plate 20. During contact, the transducer plate 20 supports the bumper 80. To this end, the bumper tip 82 engages a depression 84 provided at the transducer plate 20.

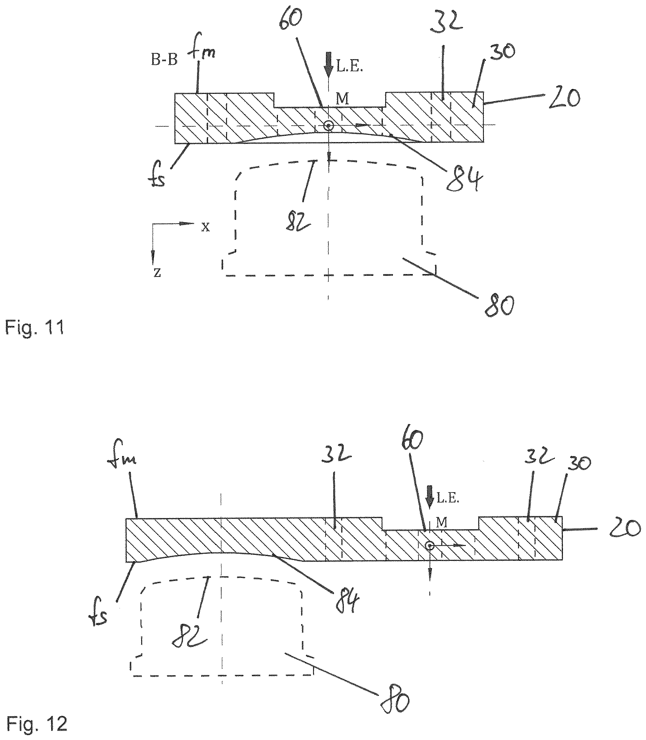

According to a preferred embodiment of the present invention, the depression 84 for receiving the bumper tip 82 is positioned at the supporting face fₛ of the transducer plate 20. As shown in figure 11, the depression 84 is positioned below the measuring sector 60 bearing the strain gauge 70.

According to a further preferred embodiment of the transducer plate 20, the depression 84 is arranged in a lateral extension 24 of the transducer plate 20 extending laterally of only one clamping ridge 30, but not between two clamping ridges 30 (see figure 12).

Referring to the embodiment having the lateral extension 24 of the transducer plate 20 with depression 84, the depression 84 is arranged at the support face fₛ. It is further preferred to place the depression 84 at the measuring face fₘ in order to combine the transducer plate 20 in another orientation with the multi-leaf spring arrangement 10.

The depression 84 receiving the bumper tip 82 is bent around the y-axis as follows from Fig. 2. To facilitate a bending of the depression 84, an elongated recess or notch 86 extends preferably parallel to the clamping ridges 30 through the center of the depression 84.

The bumper tip 82 engaging the depression 84 of the transducer plate 20 deforms the transducer plate 20 and thereby the measuring sector 60 bearing the strain gauge 70. Thus, the deformation of the strain gauge 70 induced by the bumper 80 results in an electrical signal. Accordingly, this mechanical deformation data is transmitted to a control unit as an electrical signal. In the same way, the deflection of the leaf spring 12 transferred to the measurement sector 60 bearing the strain gauge 70 generates respective electrical signals. This mechanical deformation data as electrical signals is also transmitted to a control unit for data evaluation.

### 6. List of reference signs

- 7: vehicle axle
- 10: multi-leaf spring assembly
- 12: leaf spring
- 14: U-bolt
- 16: threaded end of the U-bolt
- 18: nut
- 20: transducer plate
- 22: bending section
- 24: lateral plate section
- 30: clamping rich
- 32: fastening opening of the clamping ridge
- 40: stiffening web
- 50: intermediate separation segment
- 60: measuring sector
- 70: strain gauge
- 80: bumper
- 82: bumper tip
- 84: recess receiving the bumper 80
- tₛ: stiffening thickness
- t_{c}: clamping thickness
- fₛ: supporting face
- fₘ: measuring face
- N: neutral state

## Claims

1. A transducer plate (20) adapted to be mounted in a multi-leaf spring arrangement (10) so that a deflection of an adjacent leaf spring (12) can be measured, said transducer plate (20) comprises the following features:
a) at least two oppositely arranged clamping ridges (30) which are spaced from each other by a bending section (22),
b) at least two stiffening webs (40) oppositely arranged to each other and each bridging a distance between the opposed clamping ridges (30) wherein the at least two stiffening webs (40) are
b1) spaced from each other by the bending section (22), and
b2) mechanically decoupled from the bending section (22) by an intermediate separation segment (50) formed as a recess or an opening, and the transducer plate (20) comprises further
c) a measuring sector (60) centrally arranged in the bending section (22) between the clamping ridges (30) and the stiffening webs (40), respectively, wherein a wire strain gauge can be disposed on the measuring sector (60) for deflection evaluation, **characterized in that**
d) the at least two clamping ridges (30) have two fastening openings (32), respectively, for mounting the transducer plate (20) in a multi-leaf arrangement (10).

2. The transducer plate (20) according to claim 1, wherein the stiffening webs (40) have a stiffening thickness tₛ which is at least 5 % smaller than a clamping thickness t_{c} of the clamping ridges (30) each measured perpendicularly to the transducer plate (20).

3. The transducer plate (20) according to any of the preceding claims, wherein the bending section (22) comprises symmetrically arranged recesses or gaps positioned between the stiffening ridge (40) and the measuring sector (60), respectively.

4. The transducer plate (20) according to claim 3, wherein the recesses have a remaining plate thickness smaller than the stiffening thickness tₛ.

5. The transducer plate (20) according to claims 3 or 4, wherein the recesses or gaps have a triangular form tapering in the direction of the measuring sector (60).

6. The transducer plate (20) according to any of the preceding claims, which comprises a measuring face and a supporting face wherein the measuring face includes the measuring sector (60) onto which the at least one strain gauge can be mounted, and the supporting face has a depression (80) for receiving a damping element.

7. The transducer plate (20) according to claim 6, wherein the measuring sector (60) bears at least one strain gauge (70) and is encapsulated as a safeguard against contamination and damage.

8. The transducer plate (20) according to claim 6 or 7, wherein the depression (80) of the supporting face is arranged on a lateral plate section (24) which extends laterally of the clamping ridge (30) and remote from the bending section (22).

9. The transducer plate (20) according to any of the preceding claims, which is made as a one-part unit.

10. A multi-leaf spring arrangement (10) of a motor vehicle comprising the following features: a plurality of leaf springs (12) arranged in a stack, a vehicle axle (7) and a number of U-bolts (14) encompassing the vehicle axle (7) wherein the number of U-bolts (14) retains the plurality of leaf springs (12) between the vehicle axle (7) and the transducer plate (20) according to any of the preceding claims.

## Patentansprüche

1. Eine Wandlerplatte (20), die vorgesehen ist, um in einer Mehrfachblattfederanordnung (10) eingebaut zu werden, sodass eine Auslenkung einer angrenzenden Blattfeder (12) messbar ist, wobei die Wandlerplatte (20) die folgenden Merkmale aufweist:
a) mindestens zwei gegenüber angeordnete Klemmkanten (30), die durch einen Biegeabschnitt (22) voneinander beabstandet sind,
b) mindestens zwei Versteifungsstege (40), die einander gegenüberliegend angeordnet sind und jeweils einen Abstand zwischen den gegenüberliegenden Klemmkanten (30) überbrücken, wobei die mindestens zwei Versteifungsstege (40)
b1) durch den Biegeabschnitt (22) voneinander beabstandet sind, und
b2) mechanisch von dem Biegeabschnitt (22) durch ein dazwischenliegendes Trennsegment (50) entkoppelt sind, das als Aussparung oder Öffnung ausgebildet ist, und die Wandlerplatte (20) umfasst des Weiteren
c) einen Messbereich (60), der mittig in dem Biegeabschnitt (22) zwischen den Klemmkanten (30) bzw. den Versteifungsstegen (40) angeordnet ist, wobei ein Dehnungsmesstreifen auf dem Messbereich zum Auswerten der Auslenkung anordenbar ist, **dadurch gekennzeichnet, dass**
d) die mindestens zwei Klemmkanten (30) jeweils zwei Befestigungsöffnungen (32) aufweisen, um die Wandlerplatte (20) in eine Mehrfachblattanordnung (10) einzubauen.

2. Die Wandlerplatte (20) gemäß Anspruch 1, wobei die Versteifungsstege (40) eine Versteifungsdicke tₛ aufweisen, die mindestens 5% kleiner ist als eine Klemmdicke t_{c} der Klemmkanten (30), jeweils senkrecht zu der Wandlerplatte (20) gemessen.

3. Die Wandlerplatte (20) gemäß einem der vorhergehenden Ansprüche, wobei der Biegeabschnitt (22) symmetrisch angeordnete Aussparungen oder Lücken aufweist, die zwischen der Versteifungskante (40) bzw. dem Messbereich (60) angeordnet sind.

4. Die Wandlerplatte (20) gemäß Anspruch 3, wobei die Aussparungen eine verbleibende Plattendicke aufweisen, die kleiner ist als die Versteifungsdicke t_{S}.

5. Die Wandlerplatte (20) gemäß den Ansprüchen 3 oder 4, wobei die Aussparungen oder Lücken eine Dreiecksform aufweisen, die sich in Richtung des Messbereichs (60) verjüngt.

6. Die Wandlerplatte (20) gemäß einem der vorhergehenden Ansprüche, die eine Messfläche und eine Tragfläche aufweist, wobei die Messfläche den Messbereich (60) einschließt, auf dem der mindestens eine Dehnungsmesstreifen angeordnet werden kann, und die Tragefläche weist eine Vertiefung (80) zum Aufnehmen eines Dämpfungselements auf.

7. Die Wandlerplatte (20) gemäß Anspruch 6, wobei der Messbereich (60) mindestens einen Dehnungsmesstreifen (70) trägt und zum Schutz gegen Verschmutzung und Beschädigung ummantelt ist.

8. Die Wandlerplatte (20) gemäß Anspruch 6 oder 7, wobei die Vertiefung (80) der Tragefläche auf einem seitlichen Plattenabschnitt (24) angeordnet ist, der sich seitlich von der Klemmkante (30) und entfernt von dem Biegeabschnitt (22) erstreckt.

9. Die Wandlerplatte (20) gemäß einem der vorhergehenden Ansprüche, die als eine einstückige Einheit ausgebildet ist.

10. Eine Mehrfachblattfederanordnung (10) eines Motorfahrzeugs umfassend die folgenden Merkmale: eine Mehrzahl Blattfedern (12), die in einem Stapel angeordnet sind, eine Fahrzeugachse (7) und eine Anzahl von U-Bolzen (14), die die Fahrzeugachse (7) umgeben, wobei die Anzahl von U-Bolzen (14) die Mehrzahl von Blattfedern (12) zwischen der Fahrzeugachse (7) und der Wandlerplatte (20) gemäß einem der vorhergehenden Ansprüche hält.

## Revendications

1. Plaque de transducteur (20) adaptée pour être montée dans un ensemble de ressorts à lames (10) de telle façon qu'une déflexion d'un ressort à lames (12) adjacent peut être mesurée, ladite plaque de transducteur (20) comprenant les éléments suivants :
a) au moins deux nervures de serrage opposées (30), lesquelles sont espacées les unes des autres par une section de courbure (22),
b) au moins deux bandes de renforcement (40) agencées de façon opposée les unes par rapport aux autres et couvrant respectivement une distance entre les nervures de serrage opposées (30), dans laquelle les au moins deux bandes de renforcement (40) sont
b1) espacées les unes des autres par la section de courbure (22), et
b2) désaccouplées mécaniquement de la section de courbure (22) par un segment de séparation intermédiaire (50) formé comme une cavité ou une ouverture, et la plaque de transducteur (20) comprend en outre
c) un secteur de mesure (60) agencé de façon centrale dans la section de courbure (22) entre les nervures de serrage (30) et les bandes de renforcement (40), respectivement, dans laquelle une jauge extensométrique peut être disposée sur le secteur de mesure (60) pour évaluer la déflexion, **caractérisée en ce que**
d) les au moins deux nervures de serrage (30) comportent deux ouvertures de fixation (32), respectivement, pour le montage de la plaque de transducteur (20) dans un ensemble à lames (10).

2. Plaque de transducteur (20) selon la revendication 1, dans laquelle les bandes de renforcement (40) présentent une épaisseur de renforcement tₛ, laquelle est inférieure d'au moins 5 % à une épaisseur de serrage t_{c} des nervures de serrage (30) respectivement mesurées perpendiculairement à la plaque de transducteur (20).

3. Plaque de transducteur (20) selon l'une quelconque des revendications précédentes, dans laquelle la section de courbure (22) comprend des cavités ou espaces agencés de façon symétrique, positionnés entre la bande de renforcement (40) et le secteur de mesure (60), respectivement.

4. Plaque de transducteur (20) selon la revendication 3, dans laquelle les cavités présentent une épaisseur de plaque restante inférieure à l'épaisseur de renforcement tₛ.

5. Plaque de transducteur (20) selon les revendications 3 ou 4, dans laquelle les cavités ou espaces présentent une forme triangulaire s'amincissant dans la direction du secteur de mesure (60).

6. Plaque de transducteur (20) selon l'une quelconque des revendications précédentes, comprenant une face de mesure et une face de support, dans laquelle la face de mesure inclut le secteur de mesure (60) sur lequel l'au moins une jauge extensométrique peut être montée, et la face de support présente un creux (80) destiné à recevoir un élément d'amortissement.

7. Plaque de transducteur (20) selon la revendication 6, dans laquelle le secteur de mesure (60) porte au moins une jauge extensométrique (70) et est encapsulé en guise de protection contre la contamination et la détérioration.

8. Plaque de transducteur (20) selon la revendication 6 ou 7, dans laquelle le creux (80) de la face de support est agencé sur une section de plaque latérale (24), laquelle s'étend latéralement par rapport à la nervure de serrage (30) et à distance de la section de courbure (22).

9. Plaque de transducteur (20) selon l'une quelconque des revendications précédentes, laquelle est conçue comme une unité monobloc.

10. Ensemble de ressorts à lames (10) d'un véhicule à moteur comprenant les éléments suivants : une pluralité de ressorts à lames (12) agencés en une pile, un essieu de véhicule (7) et un nombre de boulons en U (14) entourant l'essieu de véhicule (7), dans lequel le nombre de boulons en U (14) retiennent la pluralité de ressorts à lames (12) entre l'essieu de véhicule (7) et la plaque de transducteur (20) selon l'une quelconque des revendications précédentes.
